# EUROPÄISCHE PATENTSCHRIFT

(11) **EP 4 070 071 B1**
(45) Veröffentlichungstag und Bekanntmachung des Hinweises auf die Patenterteilung: **27.09.2023**
(21) Anmeldenummer: 20820069.1
(22) Anmeldetag: 01.12.2020
(51) Int. Cl.: G01N 29/12, G01M 5/00, G01M 7/04, G01N 3/40, G01N 11/16, E02D 33/00

(54) **VERFAHREN ZUM MESSEN EINES AUSHÄRTEVORGANGS EINER AUSHÄRTBAREN MASSE**
METHOD FOR MEASURING A HARDENING PROCESS OF A HARDENABLE MASS
PROCÉDÉ DE MESURE D'UN PROCESSUS DE DURCISSEMENT D'UNE MASSE DURCISSABLE

(30) Priorität: 06.12.2019 DE 102019133275
(43) Veröffentlichungstag der Anmeldung: 12.10.2022
(73) Patentinhaber: fischerwerke GmbH & Co. KG, 72178 Waldachtal (DE)
(72) Erfinder: HÜGLIN, Simon, 79336 Herbolzheim (DE)
(86) Internationale Anmeldenummer: PCT/EP2020/084002
(87) Internationale Veröffentlichungsnummer: WO 2021/110617

(56) Entgegenhaltungen:
- EP-A1- 1 517 141
- WO-A1-2013/007382
- DE-A1- 10 300 947
- KR-A- 20110 119 025

## Beschreibung

Die Erfindung betrifft ein Verfahren zum Messen eines Aushärtevorgangs einer aushärtbaren Masse mit den Merkmalen des Anspruchs 1. Aus der japanischen Patentschrift JP 5896242 B2 ist eine Vorrichtung bekannt, mit welcher ein Zustand einer chemischen Verbindung zwischen einem Anker und einem Befestigungsgrund überprüfbar ist. Hierbei wird der Anker mittels eines Magneten zu einer Schwingung angeregt. Diese Schwingung wird in den umgebenden Befestigungsgrund eingekoppelt, wo sie abklingt. In einem vordefinierten Abstand wird die Intensität der abklingenden Schwingung am Befestigungsgrund gemessen. Ist die chemische Verbindung zwischen Anker und Befestigungsgrund intakt, wird ein vorbekanntes Maximum an Intensität gemessen. Ist die Verbindung hingegen unzureichend, beispielsweise aufgrund von Alterungseffekten oder Beschädigungen durch Erdbeben, wird die Schwingung von der Ankerstange aufgrund der beschädigten chemischen Verbindung nur unzureichend in den Befestigungsgrund eingekoppelt, wodurch auch nur eine geringere Intensität gemessen wird. Diese Art von Messverfahren wird zumeist in erbebenbedrohten Regionen angewendet und dient dazu, zu überprüfen, ob eine chemische Verankerung "gut" oder "schlecht" ist und folglich erneuert werden muss.

Nachteilig an der beschriebenen Methode ist, dass lediglich ein "Gut-Zustand" und ein "Schlecht-Zustand" detektiert werden.

KR 2011 0119025 A offenbart ein Verfahren zur direkten Bestimmung des Aushärtungsgrades von Beton, welcher zu diesem Zweck in Schwingungen versetzt wird. WO 2013/007382 A1, DE 103 00 947 A1 und EP 1 517 141 A1 beziehen sich auf Verfahren, die Integrität eines Befestigungsmittels und einer aushärtbaren (bzw. bereits ausgehärteten) Masse, mit der das Befestigungsmittel an einem Befestigungsgrund befestigt ist, zu überprüfen.

Aufgabe der Erfindung ist es, ein Verfahren vorzuschlagen, durch welches eine Aussage über einen Aushärtevorgang einer aushärtbaren Masse zwischen einem Befestigungsmittel und einem Befestigungsgrund getroffen werden kann. Diese Aufgabe wird erfindungsgemäß durch die Merkmale des Anspruchs 1 gelöst. Das erfindungsgemäße Verfahren dient zum Messen eines Aushärtevorgangs einer aushärtbaren Masse in einer Befestigungsanordnung. Die Befestigungsanordnung umfasst hierbei ein Befestigungsmittel, insbesondere eine Ankerstange oder eine Gewindestange, wobei sich das Befestigungsmittel insbesondere entlang einer Längsachse erstreckt. Das Befestigungsmittel ist insbesondere zylindrisch ausgestaltet und weist ein erstes und ein zweites Ende auf. Zur klebenden Befestigung des Befestigungsmittels an dem Befestigungsgrund ist eine aushärtbare Masse vorgesehen, beispielsweise ein einkomponentiger oder ein zweikomponentiger Mörtel. Das Aushärten der aushärtbaren Masse kann beispielsweise durch Einwirkung von Luftfeuchtigkeit, Wärme, Strahlung oder dergleichen auf die aushärtbare Masse oder durch Reaktionen mehrerer Komponenten der aushärtbaren Masse untereinander, erfolgen. Auch ist Aushärtung durch Frontpolymerisation denkbar. Unter "Aushärten" soll ein Übergang von einer insbesondere pastösen, flüssigen oder zähflüssigen Konsistenz der aushärtbaren Masse hin zu einer insbesondere festen Konsistenz verstanden werden. Die aushärtbare Masse dient dazu, das Befestigungsmittel an dem Befestigungsgrund, insbesondere in einem Bohrloch im Befestigungsgrund, stoffschlüssig zu befestigen. Bei dem Befestigungsgrund handelt es sich insbesondere um ein Bauwerk.

Weiter umfasst die Befestigungsanordnung einen Schwingungsgenerator. Der Schwingungsgenerator generiert Eingangsschwingungen, insbesondere mit konstanter Frequenz und/oder konstanter Amplitude, sogenannte harmonische oder periodische Schwingungen, und überträgt diese auf das Befestigungsmittel, wodurch dieses zu Ausgangsschwingungen angeregt wird. Die Schwingungsfrequenz und die Schwingungsamplitude der von dem Schwingungsgenerator erzeugten Eingangsschwingungen ist vorteilhafterweise einstellbar. Als Schwingungsgenerator kann auch ein Schlagelement dienen, welches, insbesondere mit einer konstanten Frequenz, gegen das Befestigungsmittel geschlagen wird. Ein Schwingungsanalysator dient zur Detektion und/oder zur Analyse der Ausgangsschwingungen des Befestigungsmittels. Anders formuliert kann der Schwingungsanalysator das Schwingungsverhalten des Befestigungsmittels detektieren und/oder analysieren. Der Schwingungsanalysator ist insbesondere auf die vom Schwingungsgenerator erzeugten Eingangsschwingungen und insbesondere auf das Befestigungsmittel selbst abgestimmt und ist insbesondere ein vom Schwingungsgenerator getrenntes Bauteil. Insbesondere ist der Schwingungsanalysator in der Lage, generell Schwingungsfrequenzen und/oder Schwingungsamplituden und/oder Schwingungsdämpfungen zu detektieren, diese zu speichern, grafisch darzustellen und auszuwerten. Vorteilhaft ist außerdem eine Detektion und/oder Analyse von Beschleunigungen, respektive Beschleunigungsänderungen durch den Schwingungsanalysator. Insbesondere können in den Schwingungsanalysator und/oder den Schwingungsgenerator spezifische Kenngrößen der aushärtbaren Masse sowie Kenngrößen des Befestigungsmittels, beispielsweise Gesamtlänge des Befestigungsmittels, Überstand über den Befestigungsgrund, Durchmesser des Befestigungsmittels und Materialeigenschaften des Befestigungsmittels einprogrammiert werden. Der Schwingungsanalysator kann beispielsweise kostengünstig durch ein Smartphone mit entsprechender Technik und entsprechender App realisiert werden. Insbesondere ist im Schwingungsanalysator eine Software integriert, mittels welcher der Aushärtevorgang der aushärtbaren Masse unter Einbeziehung der Kenngrößen des Befestigungsmittels detektiert und analysiert wird.

In einem Verfahrensschritt wird das Befestigungsmittel mittels der aushärtbaren Masse mit dem Befestigungsgrund, insbesondere einem Bohrloch im Befestigungsgrund, verklebt. Insbesondere wird hierzu die aushärtbare Masse in das Bohrloch des Befestigungsgrunds eingebracht und anschließend das Befestigungsmittel mit einem ersten Ende in das Bohrloch eingesteckt. In diesem Zustand ist die aushärtbare Masse in Kontakt mit dem Befestigungsmittel und insbesondere mit einer Innenwandung des Bohrlochs. Durch das Einbringen des Befestigungsmittels in das Bohrloch wird die aushärtbare Masse insbesondere in Richtung der Bohrlochmündung und teilweise darüber hinaus gepresst. Ein zweites Ende des Befestigungsmittels ragt hierbei insbesondere aus dem Bohrloch hervor, steht also über den Befestigungsgrund über. Der Schwingungsgenerator wird anschließend mit dem Befestigungsmittel verbunden. Der Schwingungsgenerator kann auch bereits mit dem Befestigungsmittel verbunden werden, bevor das Befestigungsmittel in das Bohrloch eingebracht wird. Insbesondere wird der Schwingungsgenerator über ein Kopplungselement starr mit dem Befestigungsmittel verbunden. Eine starre Verbindung zwischen dem Schwingungsgenerator und dem Befestigungsmittel ist notwendig, um die von dem Schwingungsgenerator erzeugten Eingangsschwingungen auf das Befestigungsmittel möglichst verlustfrei übertragen zu können. Insbesondere ist das Kopplungselement klemmend, beispielsweise über eine Schraubverbindung, am zweiten Ende des Befestigungsmittels angebracht. Insbesondere wird, um die Ausgangsschwingungen bzw. die Veränderung der Ausgangsschwingungen des Befestigungsmittels detektieren zu können, der Schwingungsanalysator mit dem Befestigungsmittel gekoppelt. Der Schwingungsanalysator wird insbesondere mit dem Teil des Befestigungsmittels verbunden, welcher über den Befestigungsgrund übersteht. Der Schwingungsanalysator vollführt hierbei insbesondere die Ausgangsschwingungen des Befestigungsmittels, er bewegt sich also insbesondere mit dem Befestigungsmittel mit. Der Schwingungsanalysator muss jedoch nicht mit dem Befestigungsmittel verbunden sein. Auch eine Anlage auf einer Oberfläche des Befestigungsgrunds nahe am Befestigungsmittel ist denkbar. Unter "nahe" ist insbesondere ein Abstand von wenigen Zentimetern zu verstehen. Eine Verbindung zwischen Schwingungsanalysator und Befestigungsmittel ist jedoch bevorzugt, da eine verlässliche Messung der Ausgangsschwingungen über den Befestigungsgrund selbst eine sehr hohe Messgenauigkeit und Schwingungssensitivität des Schwingungsanalysators erfordert.

Wird der Schwingungsgenerator aktiviert, werden die durch den Schwingungsgenerator erzeugten Eingangsschwingungen auf das Befestigungsmittel übertragen und das Befestigungsmittel zu Ausgangsschwingungen angeregt. Unter "Ausgangsschwingungen" sollen die Schwingungen verstanden werden, mit welchen das Befestigungsmittel bezüglich des Befestigungsgrunds unter der Einwirkung der noch nicht ausgehärteten aushärtbaren Masse schwingt, also "vibriert". Das Befestigungsmittel kann hierbei sowohl in Richtung der Längsachse, als auch quer hierzu schwingen. Auch eine Überlagerung der Schwingungsrichtungen ist möglich, so dass das Befestigungsmittel prinzipiell in alle möglichen Raumrichtungen schwingen kann.

Sobald das Aushärten der aushärtbaren Masse aktiv initiiert wird oder von selbst beginnt, beispielsweise durch Einwirkung von Luftfeuchtigkeit auf die aushärtbare Masse, ändern sich die Ausgangsschwingungen des Befestigungsmittels. Das anfänglich noch bezüglich des Befestigungsgrunds eher "frei schwingende" Befestigungsmittel wird während des Aushärtens der aushärtbaren Masse, abhängig von deren Aushärtegeschwindigkeit, immer stärker mit dem Befestigungsgrund verklebt, wodurch die Ausgangsschwingungen zunehmend gedämpft werden, solange, bis die aushärtbare Masse schlussendlich einen endfesten Zustand erreicht hat. In diesem Zustand sind insbesondere die Schwingungsamplituden der Ausgangsschwingungen maximal gedämpft. Durch die Analyse der Änderung der Schwingungsamplituden, der Schwingungsfrequenzen oder der Beschleunigung des Befestigungsmittels kann auf den Fortschritt des Aushärtevorgangs der aushärtbaren Masse rückgeschlossen werden. Möglich ist beispielsweise, dass der Benutzer des Systems ein optisches oder akustisches Signal erhält, ab wann das Befestigungsmittel ausreichend fest mit dem Befestigungsgrund verklebt ist, um kraftbelastet werden zu können. Somit kann sehr genau bestimmt werden, nach welcher Zeit das Befestigungsmittel belastet werden kann. Auch ist beispielsweise eine prozentuale Angabe über die Belastbarkeit möglich. Beispielsweise könnte angezeigt werden, dass die aushärtbare Masse zu einem gewissen Prozentsatz ausgehärtet und folglich das Befestigungsmittel bereits bedingt belastbar ist.

Die Befestigungsanordnung ist generell nicht auf Gewindestangen oder Ankerstangen, die in ein Bohrloch eingeklebt sind, beschränkt. Das Befestigungsmittel kann beispielsweise auch derart ausgestaltet sein, dass es mit einem Untergrund flächig verklebt werden kann. Anders formuliert kann das Befestigungsmittel beispielsweise eine Art "Klebepad" oder "Klebefuß" sein. Vorstellbar ist hierbei beispielsweise eine plattenartige oder tellerartige Ausgestaltung des Befestigungsmittels.

In einer weiteren vorteilhaften Ausgestaltung der Erfindung wird aus der Änderung der Ausgangsschwingungen eine Tragfähigkeit des Befestigungsmittels ermittelt. Diese Ermittlung kann entweder durch den Schwingungsgenerator selbst, durch den Schwingungsanalysator oder ein weiteres separates Bauteil erfolgen. Zwischen dem Schwingungsgenerator, dem Schwingungsanalysator und dem weiteren separaten Bauteil kann zudem eine, insbesondere drahtlose, Datenverbindung bestehen. Der Vorteil ist insbesondere darin zu sehen, dass ermittelt werden kann, mit welcher Last das Befestigungsmittel, abhängig vom Fortschritt des Aushärtens, beaufschlagt werden kann. Die Last ist beispielsweise eine Zuglast.

In einer weiteren vorteilhaften Ausgestaltung der Erfindung wird, wie bereits anfänglich erwähnt, die Änderung der Ausgangsschwingungen durch eine Anlage des Schwingungsanalysators an den Befestigungsgrund oder durch eine Anbringung des Schwingungsanalysators an das Befestigungsmittel selbst detektiert. Bei fortschreitendem Aushärten der aushärtbaren Masse werden die Ausgangsschwingungen immer stärker über die aushärtbare Masse in den Befestigungsgrund übertragen. Anders formuliert wird die Energie der Ausgangsschwingungen mit fortschreitendem Aushärtevorgang immer besser in den Befestigungsgrund übertragen. Die in den Befestigungsgrund eingekoppelten Schwingungen können durch den Schwingungsanalysator detektiert und analysiert werden.

In einer vorteilhaften Ausgestaltung des erfindungsgemäßen Verfahrens werden die durch den Schwingungsgenerator erzeugten Eingangsschwingungen während des Aushärtevorgangs der aushärtbaren Masse konstant gehalten. Somit werden durch den Schwingungsanalysator immer bekannte und insbesondere durch den Benutzer voreingestellte Eingangsschwingungen generiert, die das Befestigungsmittel vor dem Beginn des Aushärtevorgangs folglich zu konstanten Ausgangsschwingungen anregt.

Um eine möglichst präzise Detektion des Fortschritts des Aushärtevorgangs der aushärtbaren Masse zu ermöglichen und um mögliche Fehlerquellen auszuschließen, werden in einer weiteren vorteilhaften Ausgestaltung des erfindungsgemäßen Verfahrens die durch den Schwingungsgenerator erzeugten Eingangsschwingungen während des gesamten Aushärtevorgangs der aushärtbaren Masse in das Befestigungsmittel eingekoppelt.

In einer weiteren vorteilhaften Ausgestaltung des erfindungsgemäßen Verfahrens wird eine elektronische, insbesondere drahtlose, Kommunikation zwischen dem Schwingungsgenerator und dem Schwingungsanalysator hergestellt. Diese Kommunikation kann beispielsweise auf WLAN oder Bluetooth basieren. Durch die elektronische Kommunikation können, insbesondere während des gesamten Aushärtevorgangs, der Schwingungsgenerator und der Schwingungsanalysator Daten, insbesondere über den "Ist-Zustand" der aushärtbaren Masse, untereinander austauschen.

Um einem Benutzer ein unmissverständliches Signal über den Fortschritt des Aushärtevorgangs zu liefern, wird in einer weiteren vorteilhaften Ausgestaltung des erfindungsgemäßen Verfahrens, nachdem der Aushärtevorgang einen vorbestimmten Fortschritt, insbesondere 100%, erreicht hat, der Schwingungsgenerator deaktiviert. Somit wird dem Benutzer unmittelbar und eindeutig aufgezeigt, wann der Aushärtevorgang beendet ist.

Das erfindungsgemäße Verfahren wird nachfolgend anhand eines Ausführungsbeispiels erklärt.

Es zeigen:
- Figur 1: eine Befestigungsanordnung zur Durchführung des erfindungsgemäßen Verfahrens; und
- Figur 2: einen mit der Aushärtezeit abnehmenden schematischen Schwingungsamplitudenverlauf des Befestigungsmittels.

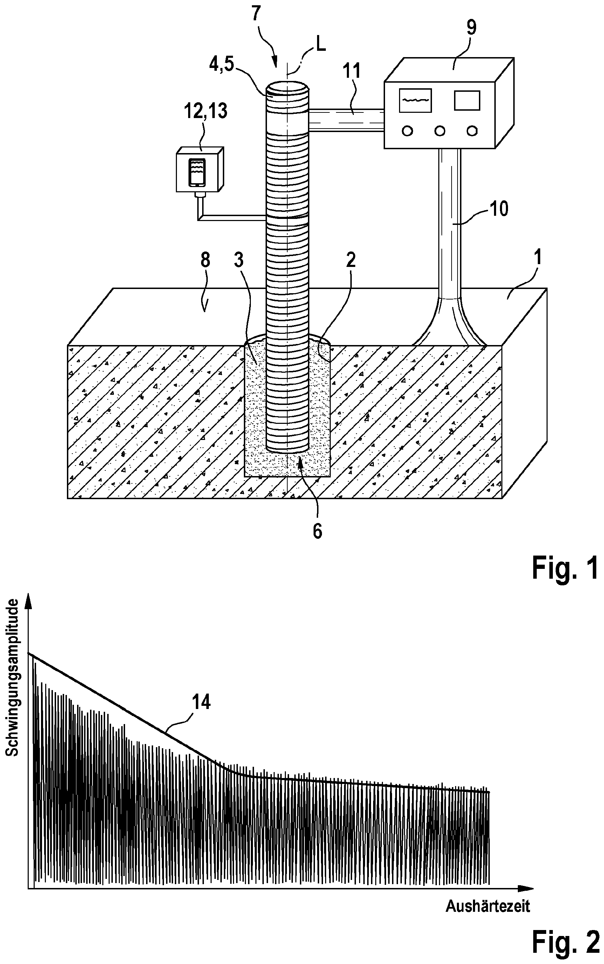

Figur 1 zeigt eine Befestigungsanordnung, in welcher das erfindungsgemäße Verfahren angewendet werden kann. Die im Folgenden beschriebenen Verfahrensschritte des erfindungsgemäßen Verfahrens müssen nicht zwangsläufig in der aufgeführten Reihenfolge durchgeführt werden.

Zur Anwendung des erfindungsgemäßen Verfahrens muss in einem Befestigungsgrund 1 ein Bohrloch 2 erstellt werden. In das Bohrloch 2 wird anschließend eine definierte Menge einer noch nicht ausgehärteten aushärtbaren Masse 3 eingebracht. Anschließend wird ein Befestigungsmittel 4, das als Ankerstange 5 ausgestaltet ist, und sich zwischen einem ersten Ende 6 und einem zweiten Ende 7 entlang einer Längsachse L erstreckt, mit dem ersten Ende 6 in das Bohrloch 2 eingebracht, wodurch eine stoffschlüssige Verbindung zwischen dem Bohrloch 2 und dem Befestigungsmittel 4 entsteht und die aushärtbare Masse 3 in Richtung Oberfläche 8 des Befestigungsgrunds 1 gedrängt wird. Hierbei kann die aushärtbare Masse 3 über die Oberfläche 8 des Befestigungsgrunds 1 austreten. Anschließend wird ein Schwingungsgenerator 9, mit einem Standfuß 10 auf der Oberfläche 8 des Befestigungsgrunds 1 platziert. Anschließend wird das zweite Ende 7 des Befestigungsmittels 4 über ein Kopplungselement 11 kraftschlüssig mit dem Schwingungsgenerator 9 verbunden. Durch diese Verbindung können vom Schwingungsgenerator 9 erzeugte Eingangsschwingungen relativ verlustfrei auf das Befestigungsmittel 4 übertragen werden, welches durch den Schwingungsgenerator 9 folglich zu Ausgangsschwingungen angeregt wird.

Zur Detektion und Analyse des Schwingungsverhaltens des Befestigungsmittels 4 wird ein Schwingungsanalysator 12, welcher ein Smartphone 13 sein kann und eine Analysesoftware beinhaltet, kraftschlüssig mit dem Befestigungsmittel 4 verbunden, wodurch der Schwingungsanalysator 12 gemeinsam mit dem Befestigungsmittel 4 schwingt. Anschließend kann der Schwingungsgenerator 9 aktiviert und der Aushärtevorgang der aushärtbaren Masse 3 gestartet werden. Der Aushärtevorgang kann hierbei aktiv, beispielsweise durch Energieeintrag, aktiviert werden. Der Aushärtevorgang kann jedoch auch "von alleine", beispielsweise durch Einwirkung von Luftfeuchtigkeit auf die aushärtbare Masse 3, erfolgen.

In Figur 2 ist schematisch das Schwingungsverhalten des Befestigungsmittels 4 dargestellt. Hierbei ist der Verlauf der Schwingungsamplituden der Ausgangsschwingungen gegen die Aushärtezeit aufgetragen. Zu Beginn der Aushärtezeit schwingt das Befestigungsmittel 4 mit maximalen Schwingungsamplituden. Das erste Ende 6 des Befestigungsmittels 4 kann sich aufgrund der noch nicht ausgehärteten aushärtbaren Masse 3 "frei" im Bohrloch 2 bewegen. Mit steigender Aushärtezeit härtet die aushärtbare Masse 3 immer mehr aus, wodurch die Schwingungsamplituden immer mehr gedämpft werden, bis die Schwingungsamplituden schließlich bei vollständiger Aushärtung der aushärtbaren Masse 3 einen konstanten Wert annehmen (in Figur 2 nicht dargestellt). Folglich zeigen die Schwingungsamplituden den in der Figur 2 schematisch dargestellten Dämpfungsverlauf 14. Mit dem Dämpfungsverlaufs 14 kann mit Hilfe des Schwingungsanalysators 12 der Fortschritt des Aushärtevorgangs der aushärtbaren Masse 3 analysiert werden. Somit könnte der Schwingungsanalysator 12 beispielsweise optisch oder akustisch anzeigen, wenn nach einer gewissen Aushärtezeit das Befestigungsmittel 4 zumindest bereits teilweise, beispielsweise zu 80%, belastet werden kann. Das Verfahren ermöglicht es somit, genaue Aussagen über die Tragfähigkeit des Befestigungsmittels 4 zu machen. Somit muss nicht länger als notwendig gewartet werden, bis das Befestigungsmittel 4 kraftbeaufschlagt werden kann.

### Bezugszeichenliste

### Verfahren zum Messen eines Aushärtevorgangs einer aushärtbaren Masse

- 1: Befestigungsgrund
- 2: Bohrloch
- 3: aushärtbare Masse
- 4: Befestigungsmittel
- 5: Ankerstange
- 6: erstes Ende des Befestigungsmittels 4
- 7: zweites Ende des Befestigungsmittels 4
- 8: Oberfläche des Befestigungsgrunds 1
- 9: Schwingungsgenerator
- 10: Standfuß
- 11: Kopplungselement
- 12: Schwingungsanalysator
- 13: Smartphone
- 14: Dämpfungsverlauf
- L: Längsachse

## Patentansprüche

1. Verfahren zum Messen eines Aushärtevorgangs einer aushärtbaren Masse (3) in einer Befestigungsanordnung, wobei die Befestigungsanordnung
- ein Befestigungsmittel (4), insbesondere eine Ankerstange (5),
- eine aushärtbare Masse (3) zur klebenden Befestigung des Befestigungsmittels (4) an einem Befestigungsgrund (1), insbesondere in einem Bohrloch (2) im Befestigungsgrund (1),
- einen Schwingungsgenerator (9) zum Erzeugen und Übertragen von Eingangsschwingungen auf das Befestigungsmittel (4),
- und einen Schwingungsanalysator (12) zur Detektion und/oder Analyse von Ausgangsschwingungen des Befestigungsmittels (4) umfasst,
wobei das Befestigungsmittel (4) in einem Verfahrensschritt mittels der aushärtbaren Masse (3) mit dem Befestigungsgrund (1) verklebt und der Schwingungsgenerator (9) mit dem Befestigungsmittel (4) verbunden wird und der Schwingungsgenerator (9) in einem weiteren Verfahrensschritt die Eingangsschwingungen in das Befestigungsmittel (4) einkoppelt und das Befestigungsmittel (4) somit zu Ausgangsschwingungen anregt, wobei eine durch den Aushärtevorgang der aushärtbaren Masse (3) bedingte Änderung der Ausgangsschwingungen des Befestigungsmittels (4) durch den Schwingungsanalysator (12) detektiert und/oder analysiert wird, wodurch ein Rückschluss auf den Fortschritt des Aushärtevorgangs der aushärtbaren Masse (3) gezogen werden kann.

2. Verfahren nach Anspruch 1, **dadurch gekennzeichnet, dass** aus der Änderung der Ausgangsschwingungen eine Tragfähigkeit des Befestigungsmittels (4) ermittelt wird.

3. Verfahren nach Anspruch 1 oder 2, **dadurch gekennzeichnet, dass** die Änderung der Ausgangsschwingungen durch eine Anlage des Schwingungsanalysators (12) an den Befestigungsgrund (1) oder durch eine Anbringung des Schwingungsanalysators (12) an das Befestigungsmittel (4) selbst detektiert wird.

4. Verfahren nach einem der Ansprüche 1 bis 3, **dadurch gekennzeichnet, dass** die durch den Schwingungsgenerator (9) erzeugten Eingangsschwingungen während des Aushärtevorgangs der aushärtbaren Masse (3) konstant gehalten werden.

5. Verfahren nach einem der Ansprüche 1 bis 4, **dadurch gekennzeichnet, dass** die durch den Schwingungsgenerator (9) erzeugten Eingangsschwingungen während des gesamten Aushärtevorgangs der aushärtbaren Masse (3) in das Befestigungsmittel (4) eingekoppelt werden.

6. Verfahren nach einem der vorhergehenden Ansprüche, **dadurch gekennzeichnet, dass** eine elektronische, insbesondere drahtlose, Kommunikation zwischen dem Schwingungsgenerator (9) und dem Schwingungsanalysator (12) hergestellt wird.

7. Verfahren nach einem der vorhergehenden Ansprüche, **dadurch gekennzeichnet, dass** mittels einer im Schwingungsanalysator (12) integrierten Software der Aushärtevorgang der aushärtbaren Masse (3) detektiert und analysiert wird.

8. Verfahren nach einem der vorhergehenden Ansprüche, **dadurch gekennzeichnet, dass,** nachdem der Aushärtevorgang einen vorbestimmten Fortschritt erreicht hat, der Schwingungsgenerator (9) deaktiviert wird.

## Claims

1. Method for measuring a curing process of a curable substance (3) in a fastening arrangement, the fastening arrangement comprising
- a fastening means (4), in particular an anchor rod (5),
- a curable substance (3) for adhesively fastening the fastening means (4) to a fastening base (1), in particular in a borehole (2) in the fastening base (1),
- a vibration generator (9) for generating and transmitting input vibrations to the fastening means (4),
- and a vibration analyzer (12) for detecting and/or analyzing output vibrations of the fastening means (4),
wherein, in one method step, the fastening means (4) is adhered to the fastening base (1) by means of the curable substance (3) and the vibration generator (9) is connected to the fastening means (4) and, in a further method step, the vibration generator (9) couples the input vibrations into the fastening means (4) and thus excites output vibrations in the fastening means (4), wherein a change in the output vibrations of the fastening means (4) caused by the curing process of the curable substance (3) is detected and/or analyzed by the vibration analyzer (12), as a result of which a conclusion can be drawn on the progress of the curing process of the curable substance (3).

2. Method according to claim 1, **characterized in that** a load-bearing capacity of the fastening means (4) is determined from the change in the output vibrations.

3. Method according to either claim 1 or claim 2, **characterized in that** the change in the output vibrations is itself detected following an installation of the vibration analyzer (12) on the fastening base (1) or following an attachment of the vibration analyzer (12) to the fastening means (4).

4. Method according to any of claims 1 to 3, **characterized in that** the input vibrations generated by the vibration generator (9) are kept constant during the curing process of the curable substance (3).

5. Method according to any of claims 1 to 4, **characterized in that** the input vibrations generated by the vibration generator (9) are coupled into the fastening means (4) during the entire curing process of the curable substance (3).

6. Method according to any of the preceding claims, **characterized in that** electronic, in particular wireless, communication is established between the vibration generator (9) and the vibration analyzer (12).

7. Method according to any of the preceding claims, **characterized in that** the curing process of the curable substance (3) is detected and analyzed by means of software integrated in the vibration analyzer (12).

8. Method according to any of the preceding claims, **characterized in that** the vibration generator (9) is deactivated after the curing process has achieved predefined progress.

## Revendications

1. Procédé permettant la mesure d'un processus de durcissement d'une masse (3) durcissable dans un agencement de fixation, dans lequel l'agencement de fixation comprend
- un moyen de fixation (4), en particulier une barre d'ancrage (5),
- une masse (3) durcissable permettant la fixation adhésive du moyen de fixation (4) à un support de fixation (1), en particulier dans un alésage (2) dans le support de fixation (1),
- un générateur de vibrations (9) permettant de générer et de transmettre des vibrations d'entrée au moyen de fixation (4),
- et un analyseur de vibrations (12) permettant de détecter et/ou d'analyser des vibrations de sortie du moyen de fixation (4),
dans lequel, dans une étape de procédé, le moyen de fixation (4) est collé au support de fixation (1) à l'aide de la masse (3) durcissable et le générateur de vibrations (9) est relié au moyen de fixation (4) et, dans une autre étape de procédé, le générateur de vibrations (9) injecte les vibrations d'entrée dans le moyen de fixation (4) et excite ainsi le moyen de fixation (4) en vibrations de sortie, dans lequel une variation des vibrations de sortie du moyen de fixation (4) due au processus de durcissement de la masse (3) durcissable est détectée et/ou analysée par l'analyseur de vibrations (12), moyennant quoi une conclusion concernant l'avancée du processus de durcissement de la masse (3) durcissable peut être tirée.

2. Procédé selon la revendication 1, **caractérisé en ce qu'**une capacité de charge du moyen de fixation (4) est déterminée à partir de la variation des vibrations de sortie.

3. Procédé selon la revendication 1 ou 2, **caractérisé en ce que** la variation des vibrations de sortie est détectée elle-même suite à une installation de l'analyseur de vibrations (12) sur le support de fixation (1) ou suite à un montage de l'analyseur de vibrations (12) sur le moyen de fixation (4).

4. Procédé selon l'une des revendications 1 à 3, **caractérisé en ce que** les vibrations d'entrée générées par le générateur de vibrations (9) sont maintenues constantes pendant le processus de durcissement de la masse (3) durcissable.

5. Procédé selon l'une des revendications 1 à 4, **caractérisé en ce que** les vibrations d'entrée générées par le générateur de vibrations (9) sont injectées dans le moyen de fixation (4) pendant tout le processus de durcissement de la masse (3) durcissable.

6. Procédé selon l'une des revendications précédentes,
**caractérisé en ce qu'**une communication électronique, en particulier sans fil, est établie entre le générateur de vibrations (9) et l'analyseur de vibrations (12).

7. Procédé selon l'une des revendications précédentes,
**caractérisé en ce que** le processus de durcissement de la masse (3) durcissable est détecté et analysé à l'aide d'un logiciel intégré dans l'analyseur de vibrations (12).

8. Procédé selon l'une des revendications précédentes,
**caractérisé en ce que** le générateur de vibrations (9) est désactivé après que le processus de durcissement a atteint une avancée prédéfinie.
